Europäisches Patentamt

European Patent Office

Office européen des brevets

(19)

(11) Publication number: **0 415 241 A2**

# EUROPEAN PATENT APPLICATION

(12)

(21) Application number: 90116022.6

(22) Date of filing: 22.08.90

(51) Int. Cl.5: **G02F 2/02**, F41J 2/02

(30) Priority: 28.08.89 US 399138

(43) Date of publication of application:
06.03.91 Bulletin 91/10

(84) Designated Contracting States:
CH DE FR GB IT LI SE

(71) Applicant: Hughes Aircraft Company
7200 Hughes Terrace P.O. Box 45066
Los Angeles, California 90045-0066(US)

(72) Inventor: Bates, Kenn S.
6481 Atlantic Ave. No. 242
Long Beach, California 90805(US)
Inventor: Chang, David B.
14212 Livingston
Tustin, California 92680(US)
Inventor: Linn, James W.
1728 Elm Avenue
Manhattan Beach, California 90266(US)

(74) Representative: Witte, Alexander, Dr.-Ing.
Augustenstrasse 7
W-7000 Stuttgart 1(DE)

(54) Durable infrared target having fast response time.

(57) A fast infrared target (10) is disclosed, which provides for conversion of near infrared to far infrared, far infrared to near infrared, infrared to visible light, and visible light to infrared radiation. The target includes a layer (15) of low thermal conductivity material applied to a thermally conductive layer (20). The low thermal conductivity material may be Gold-black, Welsbach or other material. The thermally conductive material may be a metal. The fast infrared target (10) provides the advantages of permitting fast refresh of information emitted by the target (10) and of providing an infrared target (10) which is durable, and able to withstand high powers of absorbed radiation and high ambient temperatures.

FIG. 1

# DURABLE INFRARED TARGET HAVING FAST RESPONSE TIME

## BACKGROUND OF THE INVENTION

The present invention relates to devices generating radiation in the infrared range (IR) to serve as IR targets for such applications as heat seeking detectors, and more particularly to a dynamic IR target wherein dynamic IR images having spatial infrared intensity variations are produced.

IR targets convert incident light of wavelength $\lambda_1$ into light of wavelength $\lambda_2$, where at least one of the wavelengths is in the infrared region. IR targets are in use today for such purposes as testing missile trackers and IR tracking systems such as forward looking infrared receivers (FLIR) or cameras. A FLIR includes a detector, such as a mercury-cadmium-telluride focal plane array of individual IR detectors and imaging optics. A FLIR may be used as an integral part of a missile seeker system; FLIRs have other uses as well. Missile trackers in use today operate in the visible or near infrared wavelength range. FLIRs operating in the IR to far infrared wavelength ranges exist today. A FLIR is essentially a thermal video camera, having a viewing screen for displaying detected images.

The conventional IR target is the BLY cell, which is commonly used for laser-to-FLIR frequency conversion devices. See, "Passive Visible to Infrared Transducer for Dynamic Image Simulation," Vincent T. Bly, SPIE Proceedings, Vol. 226, April, 1980. The BLY cell consists of a very thin membrane, typically of a material such as goldblack, irradiated by a visible image to produce a corresponding infrared image. Incident light energy is converted into heat energy (IR) by absorption. The BLY cell, however, does not have a fast response time or desired dynamic range, is unable to handle high power levels, is prone to sintering under high temperatures, and is very fragile due to the thinness of the membrane (and the lack of a substrate backing).

Liquid crystal light valves have been employed in dynamic IR target systems. In the valve, the liquid crystal is backed by a photocell array. Voltages are created across the various portions of the liquid crystal according to the amount of light incident on that portion. Polarized IR radiation from a source illuminating the liquid crystal passes through the liquid crystal, and the plane of polarization of the IR is rotated by different amounts according to the voltage applied across the crystal. A cross polarizer is placed in the path of the IR which passes through the liquid crystal and which is reflected from an IR mirror backing the array. In this way a IR image (polarized) is formed. However, such systems are very expensive and exhibit less than perfect performance in terms of resolution, bandwidth, and response time.

The Welsbach target has also been used for conversion of laser to FLIR frequencies. Welsbach targets comprise a thin layer of Welsbach material, a selective thermal radiator. Welsbach targets are limited in speed of refresh, and are very fragile physically. The targets could not be fabricated thin enough so that the thermal inertia of the device is low enough to change the image rapidly and yet have enough structural integrity to be useful in a test environment. Examples of Welsbach targets are disclosed in U.S. Patent 4,755,673, assigned to the same assignee as the present invention.

It is therefore an object of the present invention to provide a relatively inexpensive, dynamic IR target with a fast response time with the speed depending on design parameters, good spatial resolution and adequate dynamic range.

A further object of this invention is to provide an improved IR target for the conversion of near IR to far IR frequencies, far IR to near IR frequencies, IR to visible light frequencies, and visible to IR radiation.

## SUMMARY OF THE INVENTION

A fast infrared target is disclosed for conversion of incident light of a first wavelength into light of a second wavelength, wherein at least one of the wavelengths is in the infrared region. In a preferred embodiment, the target comprises a substrate comprising a thermally conductive material, such as metal. A layer of thermally insulating target material is applied to a surface of the substrate. The thickness and the thermal conductivity of the insulating material and the thermal conductivity of the substrate determine the response time of the target. Suitable target materials include goldblack and Welsbach materials. The resulting infrared target has moderate to high resolution, has high power and temperature capabilities, is durable, and operates over a high bandwidth of frequencies.

The fast infrared target may be employed in applications which include laser-FLIR alignment testing systems and FLIR/missile seeker testing systems.

## BRIEF DESCRIPTION OF THE DRAWINGS

These and other features and advantages of the present invention will become more apparent from the following detailed description of exemplary embodiments thereof, as illustrated in the accompanying drawings, in which:

FIG. 1 is a schematic cross-sectional illustration of an IR target embodying the invention.

FIG. 2 is a simplified diagram of a test system employing an IR target as shown in FIG. 1 for alignment testing of a laser rangefinder and seeker.

FIG. 3 is a simplified diagram of a test system employing an IR target as shown in FIG. 1 for testing of an FLIR tracker or missile seeker.

## DETAILED DESCRIPTION OF THE DISCLOSURE

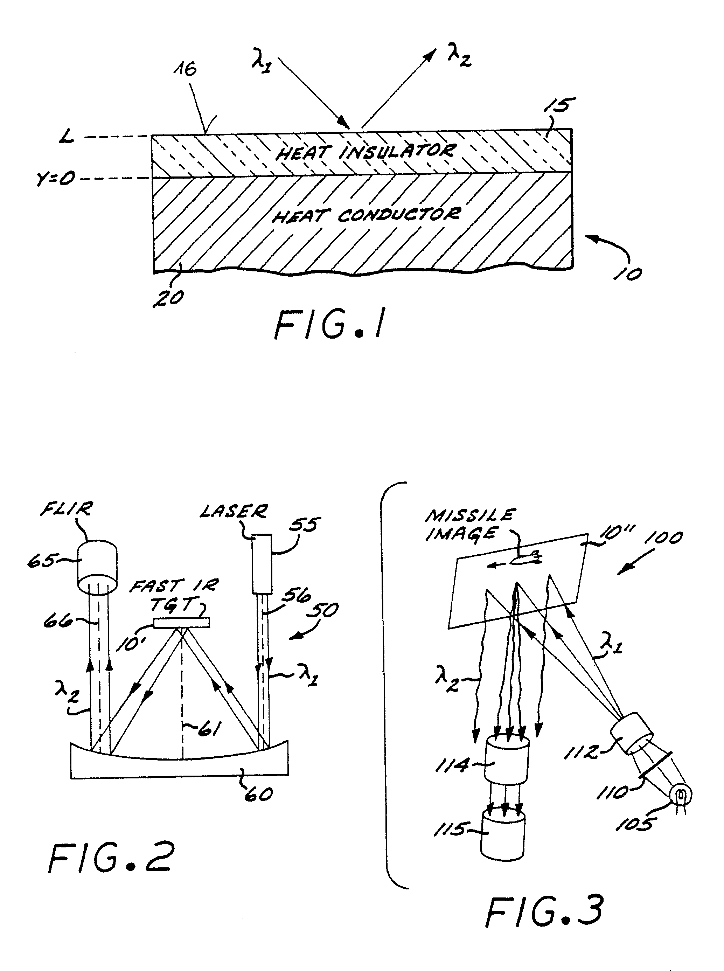

In the preferred embodiment, the IR-target comprises a thermally insulative target (low thermal conductivity) with low specific heat applied to a thermally conductive substrate. Such a target is illustrated in FIG. 1 as target 10, where the thermal insulator layer 15 is applied to the thermally conductive substrate 20.

Suitable materials for the layer 15 include goldblack, Welsbach material and heavy metal oxides doped with cerium. Goldblack is porous gold, and appears black because it has large pores on the order of the wavelength of light. Welsbach material is a type of selective thermal radiator material, the properties of which are described more fully in U.S. Patent 4,755,673, the entire contents of which are incorporated herein by this reference. Selective thermal radiators are also described, for example, in the paper "Generating light with selective thermal radiators," Phillips Technical Review, E. Kauer, Volume 26, no. 2, pp. 33-47 (1965). Selective thermal radiators have a thermal emissivity function which is strongly wavelength dependent. Specifically, such materials have high emissivity and absorption in IR wavelength intervals of interest, high emissivity and absorption in the visible wavelength interval, and very low emissivity in the intermediate wavelength interval. This property is shown in FIG. 1 of U.S. Patent 4,755,673, for an ideal selective thermal radiator.

Selective thermal radiators usually consist of a mixture of refractory metal oxides, the relative concentration selected to shape the emissivity function of the material. Typically, a base material with high absorption in the infrared range of interest and a low emissivity in the visible, e.g., zirconium or thorium oxide, is doped with a small amount of material having high emissivity in the visible wavelength interval and low emissivity elsewhere, e.g., cerium oxide. FIG. 2 of U.S. Patent 4,755,673 illustrates the dependence of spectral emissivity in the visible range on the concentration of a cerium oxide in a thorium oxide/cerium oxide mixture ($ThO_2$-$CeO_2$). Such a material can be used to convert incident visible light energy into infrared energy, as described in U.S. Patent 4,755,673, column 8, lines 44-66. By a suitable choice of hosts and dopants, a selective emissivity target in accordance with the invention using selective thermal radiators can be optimized for specific IR and visible wavelength intervals of interest for specific applications.

The thermal conductivities of exemplary materials having relatively low thermal conductivities as well as the specific heats for the materials are set forth in Table I. (Paint is also a suitable target material but is not shown in Table I because of the wide range of values depending on the paint ingredients.)

TABLE I

| Material | Thermal Conductivity (Cal/cm°Ksec) | Specific Heat (Cal/cm³°K) |
|---|---|---|
| Goldblack | $3 \times 10^{-6}$ | 0.001 |
| zirconium oxide | .004 | 0.66 |
| Thorium oxide | .037 | 0.62 |
| Welsbach | $7 \times 10^{-5}$ | 0.011 |

Suitable materials having relatively high thermal conductivities for the layer 20 include aluminum, gold, copper, silver, and diamond. The thicker the layer 20 is made, the slower is the response of the target, and its efficiency is also higher than for thinner targets. The relatively high thermal conductivities of these exemplary materials are given in Table II.

TABLE II

| Material | Thermal Conductivity (Cal/cm · Ksec) |
|---|---|
| Aluminum | 0.559 (373°K) |
| Gold | 0.750 (373°K) |
| Copper | 0.939 (373°K) |
| Silver | 1.01 (373°K) |
| Diamond | 1.58 (273°K) |

In operation, light of a wavelength or wavelength interval $\lambda_1$ is directed at the surface 16 of the layer 15, as shown in FIG. 1. The incident radiation is absorbed and is converted into heat energy. The heat energy is in turn radiated from the surface at a wavelength or wavelength interval $\lambda_2$. The incident light may, for example, be visible light from a laser or other visible light source. The emitted radiation may, for example, be in the IR wavelength interval.

The layer 15 may have a typical depth in the range of $10^{-5}$m to $10^{-3}$m. A small depth of layer 15 would blur out spatial resolution but quicken the refresh rate, while a large depth would maintain spatial integrity. Too large a depth would eliminate the effect of the conductor and slow down the target unacceptably.

The advantages of such a target are that it has a fast refresh (>60 Hz), can have a moderate (using low specific heat material, such as goldblack) to high resolution (using Welsbach treated low specific heat material), a high power capability, a high temperature capability, and a high durability, as well as a high bandwidth of frequencies over which it operates.

There are many known techniques which may be suitable for fabricating the fast IR target. Film deposition techniques include but are not limited to slurry deposition, plasma spraying, sputtering, ion deposition, vacuum evaporation, baking and pressurizing, electron beam deposition and chemical vapor deposition. Of these, it is presently believed that the plasma spraying, sputtering and slurry deposition techniques may be best suited for producing the fast IR target.

Plasma spraying produces very hard, durable and thick films. However, the temperatures involved are very high, so only ceramic-like film materials can be used. Thus, Welsbach materials can be deposited by plasma spraying.

Slurry deposition is essentially a generalization of painting. In this method a paste or suspension comprising the material desired for the film in suspension in a solvent is applied to the surface of the substrate. When the solvent evaporates, the suspended material and binder will be adhered to the substrate surface. There are numerous known methods for applying a slurry to a surface, including spinning, painting and laminar flowing. These all give differing quality levels to the films produced, depending on the materials used and the process parameters.

Sputtering is a directed flow ion bombardment deposition method. Sputtering produces good quality films of differing durability.

Film deposition methods have been extensively described in the literature. See, e.g., Materials Research Society Bulletin, Vol, XIII, Nos. 11 and 12, November and December 1988; "Plasma Spray Deposition Processes," H. Herman, Materials Research Society Bulletin, Vol. XIII, No. 12, December 1988; and "Sputter Deposition Processes," Materials Research Society Bulletin, Vol. XIII, No. 12, December 1988.

By way of example, a fast IR target has been fabricated using a slurry deposition technique to deposit the film on the substrate. Aluminum was used as the substrate 20; several targets were constructed, with the substrate of uniform thickness which ranged from 1/64 inch to 1/4 inch. The substrate was spray painted with commercial flat black epoxy paint (from one to two coats each), and allowed to dry, with the total coating thickness in the range of $10^{-5}$ to $10^{-4}$ meters, although thicknesses in the range of $10^{-6}$ to $10^{-3}$ meters would be expected to yield good targets. Illumination of the targets with pulsed laser energy in the visible green region gives rise to responsive radiation in the 8-12 micron region.

## Theoretical Derivation of the Principal Effect

The heat transfer equation is set forth as eq. 1.

$$D\nabla^2 T - \frac{\delta T}{\delta t} = 0 \qquad (1)$$

where $D$ ($K/C_p$), and $K, C_p$ are the heat conductivity, and the specific heat respectively.

Referring to FIG. 1, the boundary conditions are:

$y = 0$: (assume metal is a perfect heat conductor)

$$T(x, y=0, t) = 0 \qquad (2)$$

$y = L$: (conservation of energy flux)

$$S_1 = 4\epsilon\sigma T_a^3 T(x, y=L, t) + C_p D \frac{\delta T(x, y, t)}{\delta y} \qquad y=L \quad (3)$$

The solution to the heat equation (eq. 1), subject to the assumption that $T(x,y,t) = T(y) e^{+j(\omega t - kx)}$, is:

$$T(x,y,t) = T(x,t)(A \sinh(\alpha y) + B \cosh(\alpha y)) \qquad (4)$$

where $\alpha^2 = K^2 + j \frac{\omega}{D}$. If a wave-like dependence for the incident light flux ($S_1$) is assumed, then

$$S_0 = A[4\epsilon\sigma T_a^3 \sinh(L(k^2 + j\tfrac{\omega}{D})^{\frac{1}{2}})  \qquad (5)$$
$$+ C_p D(k^2 + j\tfrac{\omega}{D})^{\frac{1}{2}} \cosh((L (k^2 + j\tfrac{\omega}{D})^{\frac{1}{2}})]$$

Solving for the radiation flux at $y = L$,

$$F(y=L) = 4\epsilon\sigma T_a^3 \, T(x, y=L, t) \qquad (6)$$

$$= S_o e^{+j(\omega t - kx)} / [ (1 + \frac{C_p D (k^2 + j \frac{\omega}{D})}{4\epsilon\sigma T_a^3})^{\frac{1}{2}} \coth (L(k^2 + j\tfrac{\omega}{D})^{\frac{1}{2}})]$$

The equations may be solved for percentage efficiency (%E) at room temperature ($T_a = 300°$ K) for representative materials. For thoria, the representative parameter values are K 0.037 (cal/cm $°$K sec), $C_m = C_p = 0.62$ (cal/cm³ $°$K), and D = 0.06(cm²/sec) for L = 0.1 cm (the thickness of the insulator layer 15):

$$\%E = \frac{F}{S_o} = \frac{1}{2.5 \times 10^4} = .004\%$$

For Welsbach material, the representative parameters are K = $7\times10^{-5}$ (cal/cm $°$K sec) $C_m = C_p = 0.011$ (cal/cm³ $°$K) and D = $6.4\times10^{-3}$ (cm²/sec) for L = 0.1 cm (the thickness of the insulator layer 15):

$$\%E = \frac{1}{400} = 0.25\%$$

For Welsbach material, the projector flux, $S_o$, required to produce an apparent $\Delta T = 5°$ K between the target and background is $S_o$ = 3.7 watts/cm². A $\Delta T = 5°$ K is sufficient for testing most FLIR devices. This light power density, 3.7 watts/cm², is quite reasonable to provide by standard means, such as laser or incandescent light sources.

FIG. 2 is a simplified schematic drawing illustrating a laser-FLIR alignment testing system 50 employing a fast IR target in accordance with the invention. Laser 55 produces a beam of laser light at a dominant frequency or frequency range $\lambda_1$, which is incident on the collimating mirror 60. For example, the laser 55 may generate laser light in the near IR wavelength range (e.g., 1.06 micron). The mirror 60 focuses the laser beam on the fast IR target 10′, constructed in accordance with the principles described with respect to FIG. 1. The target 10′ is located at the focal point of the collimating mirror 60. The target 10′ absorbs some of the incident light beam, and converts some of the absorbed energy into emitted omnidirectional radiation

at frequency $\lambda_2$. The emitted radiation is directed to the FLIR sensor 65 by the collimating mirror 60.

In testing laser to FLIR alignment, the object is to verify that the laser boresight 56 is exactly parallel to the FLIR boresight 66. The FLIR boresight is the direction that the FLIR device points. By placing the target at the focal point of the collimating mirror 60, all light coming into the mirror parallel to the mirror's axis 61 is focused on the target. Also, all light emitted by the target is, after collimation by the mirror, directed in a direction parallel to the mirror's axis. Therefore, if the image of the laser beam appears in the center of the FLIR screen then the boresight 56 of the laser 55 and the FLIR boresight 66 are aligned; otherwise they are not.

FIG. 3 is a simplified schematic drawing illustrating a testing system 100 for testing a FLIR or missile seeker using a fast IR target 10″ in accordance with the invention. A visible light source 105, such as an incandescent bulb, generates light at the dominate wavelength or wavelength region $\lambda_1$. Element 110 is a film comprising an opaque region surrounding a transparent region defining a missile image. Element 112 is an imaging lens for imaging the missile image onto the target 10″. Thus, the visible light projected onto the fast IR target defines a missile-shaped image on the surface of the target 10". The incident visible light energy is absorbed by the target 10″, and some of the absorbed energy is converted into emitted radiation at the infrared wavelength $\lambda_2$. The emitted radiation defines a missile-shaped image, thereby simulating the infrared radiation signature of a missile. This image may be a dynamic one which changes or moves over time, in response to movement of the projected visible image. To produce a dynamically changing image, a motion picture projector with a high intensity light bulb could be used. The infrared radiation is collimated and directed toward the FLIR tracker or missile seeker 115 by collimating lens 114.

When an off-axis missile image is presented to the FLIR tracker or missile seeker device, electrical signals are produced by the device to indicate how far off-axis the missile image is believed to be. A comparison of this number to the actual known off-axis location of the missile image will allow testing and calibration of the device.

An improved IR target has been disclosed for conversion of near IR to far IR, far IR to near IR, IR to visible, and visible to IR radiation. Advantages of the invention include:

(a) faster refresh of information emitted by the target is permitted by allowing for fast thermalization of excess heat through the metal substrate with the response time determined by the thickness and the thermal conductivity of the insulating material and the thermal conductivity of the substrate;

(b) more durable IR targets are provided by allowing metal backings (many other targets are unbacked, flimsy and easily torn);

(c) IR targets that are able to withstand higher powers of absorbed radiation due to fast thermalization are provided; and

(d) IR targets which can withstand higher ambient temperatures are provided.

It is understood that the above-described embodiments are merely illustrative of the possible specific embodiments which may represent principles of the present invention. Other arrangements may readily be devised in accordance with these principles by those skilled in the art without departing from the scope of the invention.

## Claims

1. A fast infrared target apparatus for conversion of incident light of wavelength ($\lambda_1$) into radiation of wavelength ($\lambda_2$), where at least one of the wavelengths ($\lambda_1$, $\lambda_2$) is in the infrared region, characterized by:
- a substrate (20) of a thermally conductive material; and
- a layer (15) of thermally insulative target material applied to a surface of said substrate (20).

2. A laser-Forward-Infrared-Looking-Receiver (FLIR) alignment testing apparatus, characterized by:
- a laser device (55) for generating a beam of laser light along a first axis;
- a FLIR sensor (65) aligned along a second axis substantially aligned with said first axis;
- means for testing the alignment of said FLIR sensor (65) with said laser device (55), said means comprising:
- an infrared target (10′) comprising a substrate (20) of a thermally conductive material and a layer (15) of thermally insulative target material applied to a planar surface of said substrate (20); and
- a collimating mirror (60) having a concave reflecting surface disposed with respect to said laser light beam and said target (10′) to intercept and reflect said beam onto said target material, said mirror (60) further being arranged with respect to said FLIR sensor (65) so as to reflect corresponding infrared radiation emitted by said infrared target (10′) substantially along said second axis.

3. An infrared sensor testing apparatus, characterized by:

6

- an infrared target (10") comprising a substrate (20) of a thermally conductive material and a layer (15) of thermally insulative target material applied to a planar surface of said substrate (20); and
- a visible light generator (105-112) for illuminating said target material with a desired visible light image.

4. The testing apparatus of Claim 3, characterized in that said visible light generator comprises a visible light source (105) and an image-defining element (110) interposed between said light source (105) and said target (10"), said image defining element (110) comprising an opaque region surrounding a transparent region, said transparent region shaped in the form of said desired image.

5. The apparatus of any of Claims 1 through 4, characterized in that said thermally conductive material comprises a metal.

6. The apparatus of any of Claims 1 through 5, characterized in that said thermally insulative target material is a low specific heat material.

7. The apparatus of Claim 6, characterized in that said target material comprises goldblack.

8. The apparatus of any of Claims 1 through 5, characterized in that said target material comprises paint.

9. The apparatus of any of Claims 1 through 8, characterized in that said target material comprises a selective thermal radiator material, comprising a base material with high absorption in the infrared range of interest and low emissivity in the visible range, and a dopant material having high emissivity in the visible range and low emissivity elsewhere, said selective thermal radiator having low emissivity at intermediate wavelengths.

10. The appratus of Claim 9, characterized in that said base material is selected from the group consisting of zirconium oxide and thorium oxide, and said dopant comprises cerium oxide.

11. The apparatus of any of Claims 1 through 10, characterized in that the layer (15) of thermally insulative target material has a thickness in the range of about $10^{-6}$ meters to about $10^{-3}$ meters.

*FIG.1*

*FIG.2*

*FIG.3*